# FASCICULE DE BREVET EUROPEEN

(11) **EP 2 697 039 B1**
(45) Date de publication et mention de la délivrance du brevet: **12.08.2015**
(21) Numéro de dépôt: 12722767.6
(22) Date de dépôt: 10.04.2012
(51) Int. Cl.: B29C 70/32, B29C 53/56, B29C 53/80, B29L 31/00, B32B 37/00

(54) **DISPOSITIF DE COMPACTAGE POUR MACHINE D'ENROULEMENT D'UNE TEXTURE FIBREUSE SUR UN MANDRIN D'IMPRÉGNATION**
KOMPAKTIERVORRICHTUNG FÜR EINE MASCHINE ZUM AUFWICKELN EINER FASERIGEN TEXTUR AUF EINEN IMPRÄGNIERDORN
COMPACTING DEVICE FOR A MACHINE FOR WINDING A FIBROUS TEXTURE ONTO AN IMPREGNATION MANDREL

(30) Priorité: 13.04.2011 FR 1153213
(43) Date de publication de la demande: 19.02.2014
(73) Titulaire: SNECMA, 75015 Paris (FR)
(72) Inventeur: MATHON, Richard, New Castle, New Hampshire 03854 (US); PHELIPPEAU, Antoine, Portsmouth, New Hampshire 03801 (US); GUMMEL, Micah, East Kingston, New Hampshire 03827 (US); DURAND, Jean-François, F-12160 Baraqueville (FR)
(74) Mandataire: Boura, Olivier
(86) Numéro de dépôt international: PCT/FR2012/050778
(87) Numéro de publication internationale: WO 2012/140357

(56) Documents cités:
- WO-A1-2009/097514
- FR-A1- 2 656 826
- US-A1- 2007 272 346
- US-A1- 2008 000 576
- US-A1- 2008 093 026

## Description

### Arrière-plan de l'invention

La présente invention se rapporte au domaine général de la réalisation de carters de turbine à gaz en matériau composite, et plus particulièrement de carters de rétention pour soufflante de turbine à gaz pour moteurs aéronautiques.

Dans un moteur aéronautique à turbine à gaz, un carter de soufflante remplit plusieurs fonctions : il définit la veine d'entrée d'air dans le moteur, supporte un matériau abradable en regard du sommet des aubes de la soufflante, supporte une structure éventuelle d'absorption d'ondes sonores pour le traitement acoustique en entrée du moteur et incorpore ou supporte un bouclier de rétention. Ce dernier constitue un piège retenant les débris, tels que des objets ingérés ou des fragments d'aubes endommagées, projetés par la centrifugation, afin d'éviter qu'ils traversent le carter et atteignent d'autres parties de l'aéronef.

De façon courante, un carter de rétention de soufflante est formé par une paroi relativement mince définissant la veine d'entrée d'air et supportant un matériau abradable au droit de la trajectoire des sommets des aubes de soufflante et le revêtement de traitement acoustique éventuel, et par une structure de bouclier fixé sur cette paroi du côté extérieur, au niveau de la soufflante.

La réalisation d'un carter de rétention de soufflante en matériau composite a déjà été proposée. On pourra par exemple se référer au document EP 1,961,923 qui décrit la fabrication d'un carter en matériau composite à épaisseur évolutive comprenant la formation d'un renfort fibreux par des couches superposées d'une texture fibreuse et la densification du renfort fibreux par une matrice. Plus précisément, ce document prévoit d'utiliser un mandrin d'appel pour le tissage tridimensionnel de la texture fibreuse, celle-ci étant ensuite enroulée en couches superposées sur un mandrin d'imprégnation présentant une surface extérieure dont le profil correspond à celui de la partie centrale du carter à fabriquer et deux flasques latéraux correspondant à des brides de fixation du carter. La préforme fibreuse ainsi obtenue est maintenue sur le mandrin d'imprégnation et une imprégnation par résine est réalisée avant polymérisation.

La mise en oeuvre pratique de ce procédé pose le problème du transfert de la texture fibreuse depuis le mandrin d'appel vers le mandrin d'imprégnation. Au cours de cet enroulement, il est notamment nécessaire d'assurer un niveau de compactage adéquat des couches de texture fibreuse superposées sur le mandrin d'imprégnation. En effet, le niveau de compactage des couches de texture fibreuse au cours de leur enroulement influe directement sur le taux de fibres de la préforme obtenue. En particulier, le compactage des couches de texture fibreuse doit pouvoir être exercé aussi sur la surface extérieure du mandrin d'imprégnation que dans les angles formés entre cette surface et les flasques latéraux du mandrin.

Par conséquent, un besoin existe de disposer d'un outil permettant d'assurer un compactage efficace et adéquat des différentes couches de texture fibreuse au fur et à mesure de leur enroulement sur le mandrin d'imprégnation.

US 2007/272346 divulgue un dispositif de compactage selon le préambule de la revendication 1.

### Objet et résumé de l'invention

La présente invention a donc pour but principal de pallier un tel besoin en proposant un dispositif de compactage pour machine d'enroulement d'une texture fibreuse sur un mandrin d'imprégnation selon la revendication 1.

En fonctionnement, le rouleau du dispositif de compactage selon l'invention exerce une pression sur les couches de texture fibreuse superposées sur le mandrin d'imprégnation dans ce qui constituera la partie centrale du carter à fabriquer, cette pression contribuant à compacter ces couches. De même, le compactage des couches de texture fibreuse au niveau des angles formés entre la partie centrale et ce qui constituera les brides de fixation du carter à fabriquer est assuré par la pression exercée par les galets du dispositif de compactage.

Par ailleurs, le dispositif de compactage permet d'optimiser l'application d'une tension sur la texture fibreuse lors de son enroulement sur le mandrin d'imprégnation. L'effet de compactage permet ainsi de mettre la préforme à son niveau de compactage final et l'application d'une tension à l'enroulement (comprise entre 500N et 1500N) permet de figer la préforme à ce niveau de compactage, même lorsque celle-ci n'est plus sous le rouleau et les galets de compactage.

Le dispositif de compactage comprend des moyens de mise en vibration du rouleau et des galets de compactage. La mise en vibration du rouleau et des galets de compactage provoque des micro-martèlements sur les couches de texture fibreuse qui amplifient l'effet de compactage de la préforme.

Ces moyens de mise en vibration du rouleau et des galets de compactage peuvent comprendre au moins un vibreur électrique monté sur le châssis.

De préférence également, le dispositif de compactage comprend des moyens de réglage de la position relative du rouleau de compactage par rapport au châssis. Une telle possibilité de réglage permet d'ajuster parfaitement la position du rouleau de compactage sur les couches de texture fibreuse enroulées sur le mandrin d'imprégnation.

Dans ce cas, le rouleau de compactage peut être monté de façon rotative entre deux platines solidaires du châssis, chaque platine ayant une extrémité qui est solidaire en rotation d'une roue dentée apte à pivoter autour d'un axe horizontal par engrènement d'une vis sans fin.

La surface extérieure du rouleau de compactage présente avantageusement un profil correspondant à celui de la surface extérieure du mandrin d'imprégnation contre lequel il est destiné à venir en appui.

Le rouleau de compactage peut comprendre une pluralité de sections longitudinales de rouleau indépendantes en rotation les unes des autres. Compte tenu du diamètre généralement évolutif d'un carter de rétention, cette particularité du dispositif de compactage permet d'autoriser un différentiel de rotation entre toutes les sections de rouleau afin d'assurer un roulement sans frottement en tout point du mandrin.

Le dispositif de compactage comprend en outre des moyens de réglage de la position relative des galets de compactage par rapport au châssis. Cette possibilité de réglage permet d'ajuster parfaitement la position des galets de compactage sur les angles formés entre la surface extérieure et les flasques latéraux du mandrin d'imprégnation.

Chaque galet de compactage est monté sur un support de galet ayant une première partie formant étrier apte à coulisser sur une tige longitudinale fixe du châssis de façon à permettre un réglage de la position relative des galets de compactage par rapport au châssis selon une direction longitudinale, et une seconde partie formant coulisseau montée sur la première partie et apte à coulisser par rapport à celle-ci selon une direction radiale de façon à permettre un réglage de la position relative des galets de compactage par rapport au châssis selon cette direction radiale.

De préférence, le rouleau de compactage et les galets de compactage sont recouverts d'un revêtement réalisé dans un matériau élastomère. Le recours à un revêtement en élastomère permet aux rouleau et galets de compactage de mieux s'adapter au profil extérieur du mandrin d'imprégnation pour assurer l'application d'une pression sensiblement uniforme en tout point du mandrin.

L'invention a également pour objet une machine d'enroulement d'une texture fibreuse sur un mandrin d'imprégnation, comprenant un mandrin d'appel sur lequel est destiné à être stockée une texture fibreuse obtenue par tissage tridimensionnel, le mandrin d'appel ayant un axe de rotation sensiblement horizontal, un mandrin d'imprégnation sur lequel est destinée à être enroulée en couches superposées la texture fibreuse stockée sur le mandrin d'appel, le mandrin d'imprégnation ayant un axe de rotation sensiblement horizontal et parallèle à l'axe de rotation du mandrin d'appel, des moteurs électriques pour entraîner en rotation les mandrins autour de leur axe de rotation respectif, une unité de commande des moteurs électriques d'entraînement en rotation des mandrins, et un dispositif de compactage tel que défini précédemment.

De préférence, la machine d'enroulement comprend en outre un bâti sur lequel est monté de façon rotative autour d'un axe sensiblement horizontal le dispositif de compactage, et au moins un vérin dont le corps est fixé sur le bâti et la tige fixée sur le châssis du dispositif de compactage de façon à pouvoir pivoter le dispositif autour de l'axe horizontal.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en perspective d'une machine d'enroulement d'une texture fibreuse sur un mandrin d'imprégnation comprenant un dispositif de compactage selon l'invention ;
- les figures 2 et 3 sont des vues de la machine d'enroulement de la figure 1, respectivement de côté et de dessus ;
- les figures 4 à 6 sont des vues en perspective et de côté du dispositif de compactage selon l'invention équipant la machine d'enroulement de la figure 1 ;
- les figures 7A et 7B sont des vues du dispositif de compactage des figures 4 à 6 montrant le réglage de la position du rouleau de compactage ; et
- les figures 8A et 8B sont des vues du dispositif des figures 4 à 6 montrant le réglage de la position des galets de compactage.

### Description détaillée d'un mode de réalisation

L'invention sera décrite ci-après dans le cadre de son application à la fabrication d'un carter de soufflante de moteur aéronautique à turbine à gaz.

Un exemple de procédé de fabrication d'un tel carter de soufflante est décrit dans le document EP 1,961,923 auquel on pourra se référer.

Le carter est réalisé en matériau composite à renfort fibreux densifié par une matrice. Le renfort est en fibres par exemple de carbone, verre, aramide ou céramique et la matrice est en polymère, par exemple époxide, bismaléimide ou polyimide.

Brièvement, le procédé de fabrication décrit dans ce document consiste à réaliser une texture fibreuse par tissage tridimensionnel avec appel en chaîne sur un tambour (appelé ci-après mandrin d'appel) ayant un profil déterminé en fonction du profil du carter à fabriquer. En particulier, la texture fibreuse est réalisée en un seul tenant avec une partie centrale correspondant à la partie centrale du carter à fabriquer et deux brides correspondant aux brides de fixation du carter.

La texture fibreuse ainsi réalisée est ensuite transférée sur le mandrin d'un moule d'injection de résine (ci-après appelé mandrin d'imprégnation) dont le profil extérieur correspond au profil interne du carter à fabriquer.

La préforme étant maintenue sur le mandrin d'imprégnation, une imprégnation est alors réalisée par une résine. A cet effet, une enveloppe est appliquée sur la préforme et la résine est injectée dans le moule ainsi constitué. L'imprégnation peut être assistée par établissement d'une différence de pression entre l'intérieur et l'extérieur du moule dans lequel se trouve la préforme. Après imprégnation, une étape de polymérisation de la résine est réalisée.

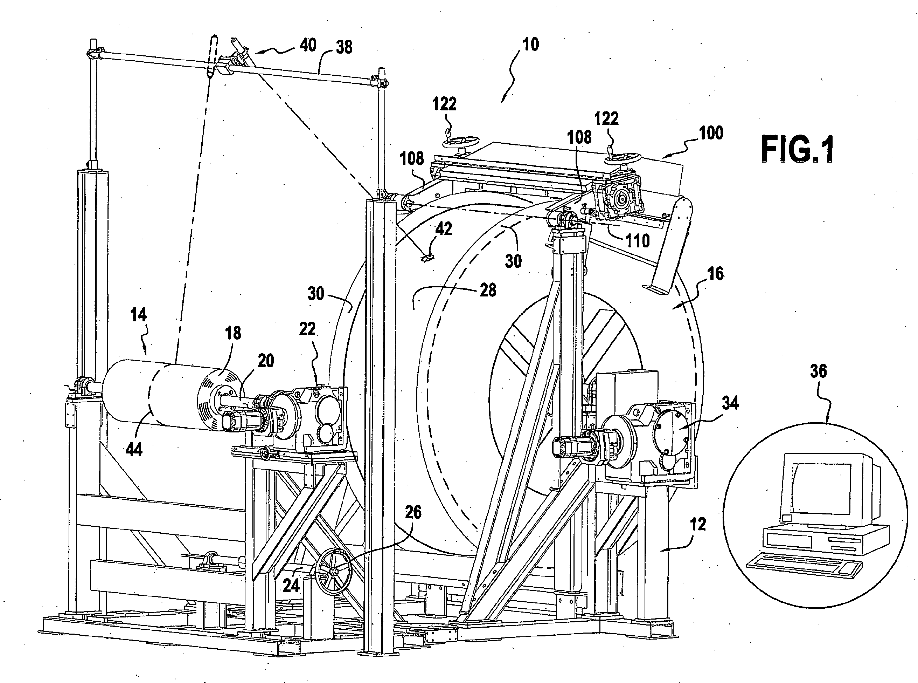

La machine d'enroulement représentée sur les figures 1 à 3 a pour fonction de permettre un transfert automatisé de la texture fibreuse stockée sur le mandrin d'appel vers le mandrin d'imprégnation du moule d'injection de résine.

La machine d'enroulement 10 comprend un bâti 12 supportant notamment un mandrin d'appel 14 et un mandrin d'imprégnation 16. Ces mandrins sont amovibles, c'est-à-dire qu'ils peuvent être démontés du bâti.

Le mandrin d'appel 14 reçoit la texture fibreuse 18 obtenue par tissage tridimensionnel. Il est porté par un axe horizontal 20 dont une extrémité est montée de façon rotative sur le bâti 12 de la machine d'enroulement et l'autre extrémité est couplée à l'arbre de sortie d'un moteur électrique 22, par exemple un motoréducteur électrique à courant alternatif.

L'ensemble constitué du mandrin d'appel 14, de son axe 20 et de son moteur électrique 22 peuvent translater par rapport au bâti le long de l'axe de rotation du mandrin d'appel. Ce degré de liberté en translation du mandrin d'appel permet de réaliser un alignement de ce mandrin sur le mandrin d'imprégnation préalablement à l'enroulement de la texture fibreuse sur le mandrin d'imprégnation.

Le système permettant d'assurer un déplacement en translation du mandrin d'appel est par exemple formé d'une tige 24 de type vis sans fin couplée au mandrin d'appel et dont une extrémité est fixée sur le bâti 12 de la machine d'enroulement et l'autre extrémité est équipée d'une manivelle 26. La rotation de la tige sous l'actionnement de la manivelle provoque ainsi une translation de l'ensemble constitué du mandrin d'appel 14, de son axe 20 et de son moteur électrique 22 par rapport au bâti.

Le mandrin d'imprégnation 16 de la machine d'enroulement est destiné à recevoir en couches superposées la texture fibreuse stockée sur le mandrin d'appel. Il présente une surface extérieure 28 dont le profil correspond à celui de la surface interne du carter à réaliser et deux flasques latéraux 30.

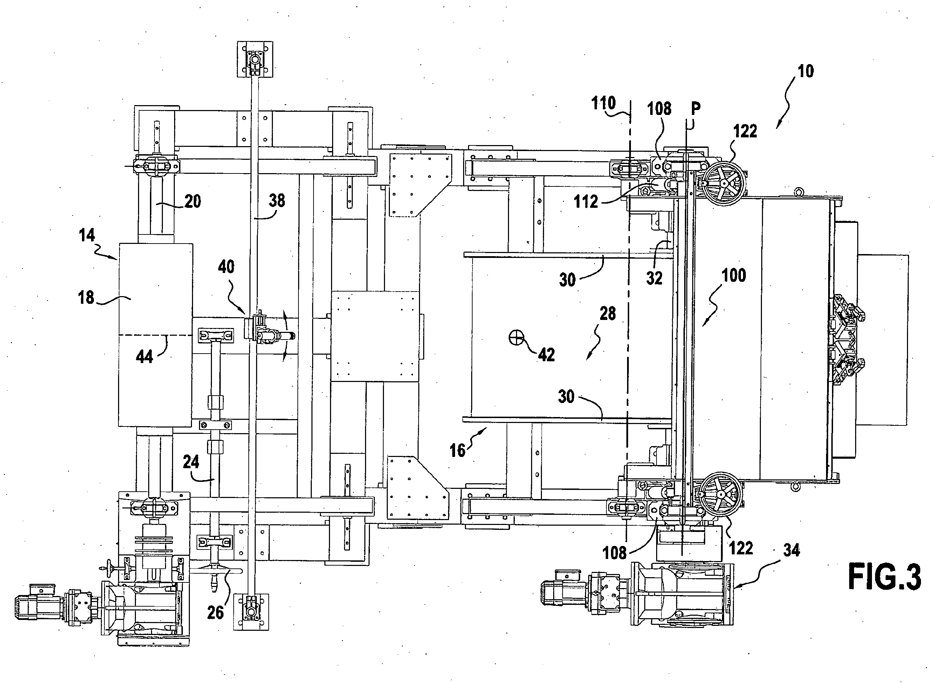

Le mandrin d'imprégnation est porté par un axe horizontal 32 (figure 3) qui est parallèle à l'axe de rotation 20 du mandrin d'appel et dont l'une extrémité est montée de façon rotative sur le bâti 12 de la machine d'enroulement et l'autre extrémité est couplée à l'arbre de sortie d'un moteur électrique 34, par exemple un motoréducteur électrique à courant alternatif.

Une unité de commande 36 est reliée aux moteurs électriques 22, 34 des deux mandrins et permet de commander et contrôler de la vitesse de rotation de chaque mandrin. De manière plus générale, cette unité de commande permet de piloter l'ensemble des paramètres de fonctionnement de la machine d'enroulement, et notamment le déplacement en translation du mandrin d'appel lorsque celui-ci est motorisé.

Le bâti 12 de la machine d'enroulement 10 supporte un portique 38 sur lequel sont montés à la verticale des mandrins des moyens de visée optique permettant de participer à l'alignement du mandrin d'appel sur le mandrin d'imprégnation préalablement à l'enroulement de la texture fibreuse sur le mandrin d'imprégnation.

Plus précisément, un système de visée optique 40 (par exemple un laser émettant un faisceau lumineux) est monté pivotant sur le portique à la verticale des mandrins. Comme représenté sur la figure 1, ce système de visée optique peut pivoter autour du portique 38 sur lequel il est monté de sorte à pouvoir viser l'un ou l'autre des mandrins dé la machine d'enroulement. Le système de visée optique possède également un degré de liberté latéral lui permettant de viser n'importe quel point sur toute la largeur de la surface extérieure 28 du mandrin d'imprégnation (figure 3).

Le mandrin d'appel 14 est aligné sur le mandrin d'imprégnation 16 préalablement à l'enroulement de la texture fibreuse de la manière suivante.

Dans un premier temps, un repère visuel 42 est positionné sur la surface extérieure 28 du mandrin d'imprégnation et le système de visée optique 40 est actionné et déplacé latéralement de façon à aligner son faisceau sur ce repère visuel. Le système de visée optique est alors verrouillé latéralement dans cette position et pivoté autour du portique 38 pour venir à la verticale du mandrin d'appel. Dans cette position, le système de visée optique vise la texture fibreuse 18 enroulée sur le mandrin d'appel 14.

Pour que le mandrin d'appel soit correctement aligné sur le mandrin d'imprégnation, il est nécessaire qu'un fil de chaîne particulier 44 de la texture fibreuse (appelé fil traceur) dont la position dans la texture fibreuse est corrélée à la position du repère visuel du mandrin d'imprégnation soit aligné sur le faisceau lumineux émis par le système de visée optique. A cet effet, le mandrin d'appel est translaté le long de son axe de rotation par actionnement de la manivelle 26 jusqu'à ce que le faisceau lumineux émis par le système de visée optique soit aligné sur le fil traceur 44.

Une fois le mandrin d'appel correctement aligné sur le mandrin d'imprégnation, l'enroulement de la texture fibreuse sur le mandrin d'imprégnation peut alors débuter. L'extrémité libre de la texture fibreuse du mandrin d'appel est d'abord fixée sur le mandrin d'imprégnation, puis les moteurs d'entraînement en rotation des mandrins sont activés et pilotés.

Plus précisément, les moteurs électriques d'entraînement en rotation des mandrins sont pilotés par l'unité de commande de façon à appliquer une tension d'enroulement adéquate sur la texture fibreuse, cette tension étant contrôlée par application d'une tension de consigne prédéfinie qui est traduite par l'unité de commande en un courant d'induction prédéterminé appliqué au mandrin qui offre le couple résistant à l'enroulement (à savoir généralement le mandrin d'appel). Le contrôle de la vitesse de rotation des mandrins est également assuré par l'unité de commande.

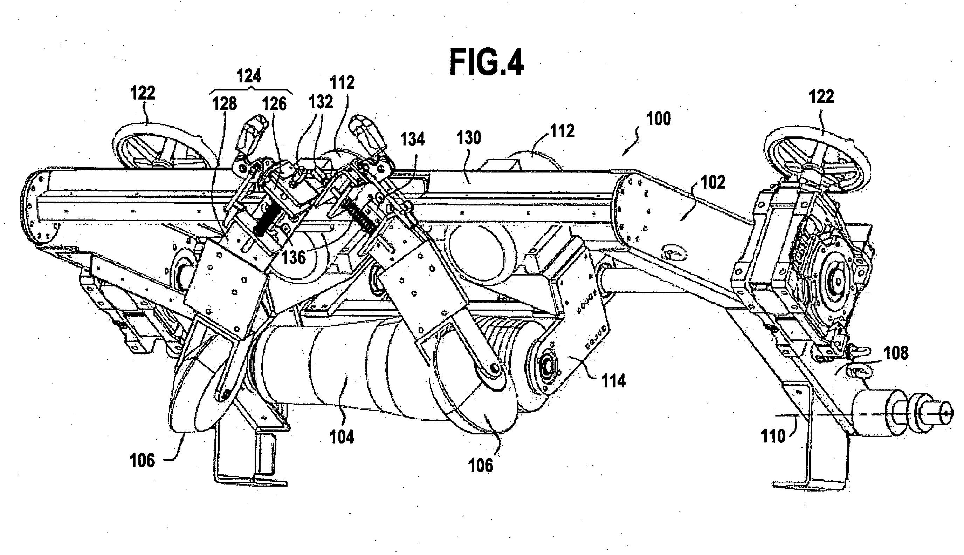

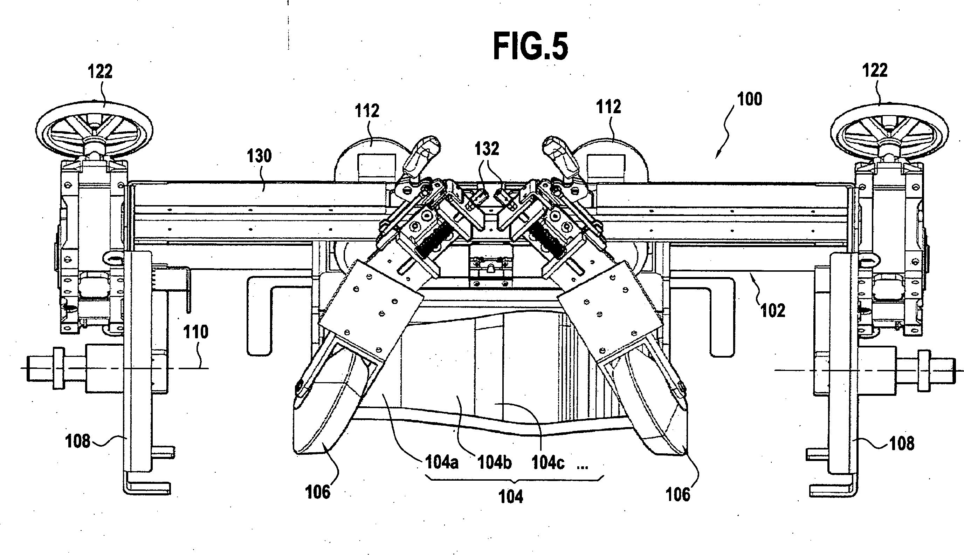

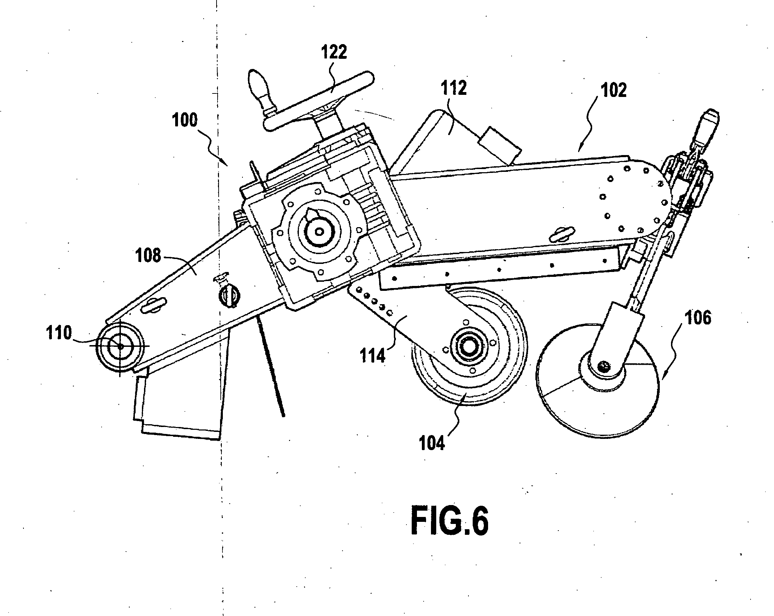

La machine d'enroulement 10 comprend également un dispositif de compactage 100 selon l'invention illustré sur les figures 4 à 6. Ce dispositif permet d'améliorer le compactage des couches de texture fibreuse lors de leur enroulement sur le mandrin d'imprégnation 16.

Le dispositif de compactage 100 comprend principalement un châssis 102 sur lequel sont montés un rouleau de compactage 104 et deux galets de compactage 106.

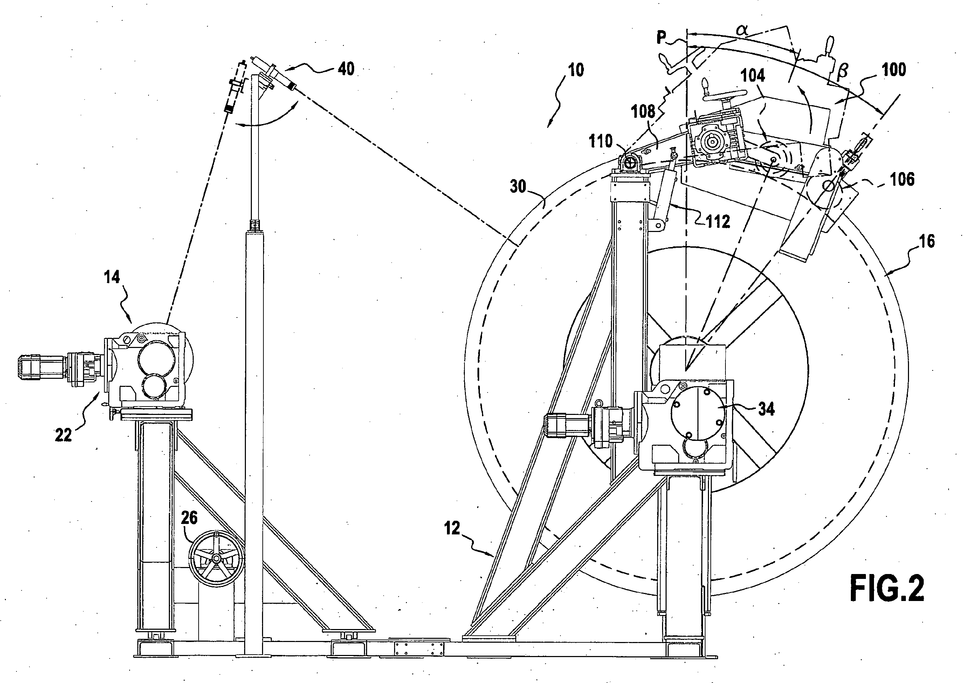

Comme représenté sur la figure 2, ce dispositif de compactage est amovible entre une position de travail dans laquelle le rouleau de compactage vient en appui contre la surface extérieure 28 du mandrin d'imprégnation et les galets de compactage viennent en appui contre les angles formés entre la surface extérieure et les flasques latéraux du mandrin d'imprégnation (en traits pleins sur la figure 2), et une position relevée dans laquelle le rouleau et les galets de compactage sont dégagés du mandrin d'imprégnation (en traits pointillés sur la figure 2).

Le dispositif de compactage est fixé sur le bâti 12 de la machine d'enroulement supportant les mandrins d'appel et d'imprégnation. Plus précisément, le châssis 102 du dispositif de compactage comprend des bras 108 qui sont montés à une extrémité sur le bâti de façon rotative autour d'un axe horizontal 110. Un vérin 112 dont le corps est fixé sur le bâti et la tige fixée sur le châssis permet de faire pivoter le dispositif, de compactage autour de l'axe horizontal 110 (voir la figure 2) et ainsi de le relever de sa position de travail.

Le dispositif de compactage comprend en outre des moyens de mise en vibration du rouleau et des galets de compactage. Par exemple, ces moyens sont constitués de deux vibreurs électriques 112 qui sont montés sur le châssis. Ces vibreurs, dont le fonctionnement est bien connu en soi, provoquent des vibrations qui se propagent depuis le châssis vers le rouleau et les galets de compactage, ces vibrations se transformant alors en des micro-martèlements sur les couches de texture fibreuse au cours de leur enroulement. Ces micro-martèlements permettent ainsi d'amplifier l'effet de compactage de la préforme.

On décrira maintenant certaines dispositions avantageuses du rouleau de compactage du dispositif de compactage.

Selon l'une de ces dispositions avantageuses, il est prévu de pouvoir régler la position relative du rouleau de compactage par rapport au châssis afin de parfaitement ajuster la position du rouleau sur la préforme enroulée sur le mandrin d'imprégnation.

A cet effet, le rouleau de compactage 104 est monté de façon rotative entre deux platines 114 solidaires du châssis 102 du dispositif de compactage. Plus précisément, chaque platine présente une extrémité qui est solidaire en rotation d'une roue dentée 116 pouvant pivoter autour d'un axe horizontal 118 par rapport au reste du châssis. Pour chaque platine 114, une vis sans fin 120 actionnable par une manivelle 122 permet de faire pivoter la roue dentée 116, et donc la platine, autour de cet axe horizontal 118, entraînant de la sorte un pivotement du rouleau de compactage par rapport au châssis.

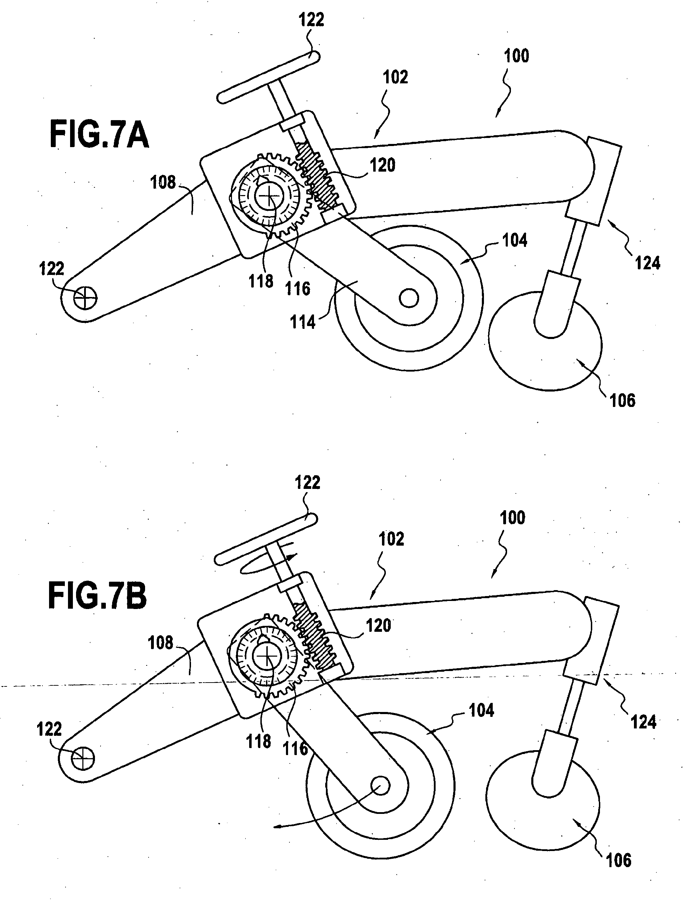

Ainsi, comme représenté sur les figures 7A et 7B, lorsque l'une des manivelles 122 est pivotée, la vis sans fin 120 solidaire de celle-ci provoque une rotation de la platine associée autour de l'axe horizontal 118. Il en résulte un déplacement de l'extrémité correspondante du rouleau de compactage 104 par rapport au châssis. En manipulant les deux manivelles, il est ainsi possible de régler la position relative du rouleau de compactage par rapport au châssis.

Selon une autre disposition avantageuse, la surface extérieure du rouleau de compactage 104 présente un profil correspondant à celui de la surface extérieure 28 du mandrin d'imprégnation 16 contre lequel il vient en appui lorsque le dispositif de compactage est dans sa position de travail.

Par ailleurs, comme représenté sur la figure 4, le rouleau de compactage 104 comprend de préférence une pluralité de sections longitudinales de rouleau 104a, 104b, 104c, etc. qui sont indépendantes en rotation les unes des autres. Généralement, le diamètre d'un carter de rétention varie entre ses deux extrémités. Aussi, la présence de sections longitudinales de rouleau libres en rotation les unes par rapport aux autres permet d'autoriser un différentiel de vitesse de rotation entre ses sections afin d'assurer un roulement du rouleau de compactage en tout point du mandrin d'imprégnation.

On décrira maintenant certaines dispositions avantageuses des galets de compactage du dispositif de compactage.

Comme pour le rouleau de compactage, il est avantageusement prévu de pouvoir régler la position relative des galets de compactage par rapport au châssis.

A cet effet, chaque galet de compactage 106 est monté sur un support de galet 124 ayant une première partie 126 formant étrier et une seconde partie 128 formant coulisseau.

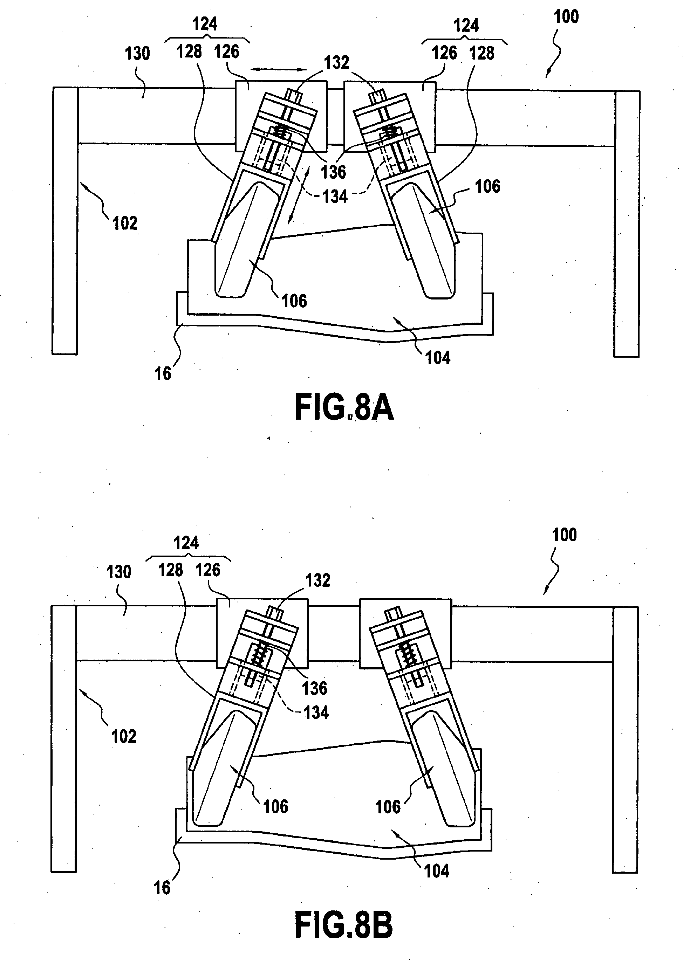

Comme représenté sur les figures 8A et 8B, la première partie 126 des supports de galet est apte à coulisser sur une tige longitudinale 130 fixe du châssis 102 de façon à permettre un réglage de la position relative des galets de compactage par rapport au châssis selon une direction longitudinale. Un système de verrou (non représenté) permet de maintenir les étriers en position.

La seconde partie 128 des supports de galet est fixée sur la première partie et elle est apte à coulisser par rapport à celle-ci selon une direction radiale de façon à permettre un réglage de la position relative des galets de compactage par rapport au châssis selon cette direction radiale.

Pour ce faire, la fixation entre les deux parties de chaque support de galet est réalisée à l'aide d'une liaison de type vis sans fin/écrou : une vis sans fin 132 solidaire de la première partie permet, lorsqu'elle est vissée ou dévissée, de faire coulisser la seconde partie le long d'un rail de guidage. 134 de la première partie, ce rail s'étendant selon une direction radiale. En d'autres termes, le vissage et le dévissage de la vis sans fin provoque un déplacement selon une direction radiale de la seconde partie du support de galet par rapport à la première partie qui reste fixe. Un ressort 136 monté autour de la vis 132 et entre des plateaux des deux parties du support de galet permet, d'une part de régler l'effort de compactage appliqué par les galets sur la préforme, et d'autre part d'absorber les irrégularités de forme de la préforme.

On décrira maintenant d'autres dispositions avantageuses du dispositif de compactage.

En particulier, le rouleau de compactage 104 et les galets de compactage 106 peuvent être recouverts d'un revêtement réalisé dans un matériau élastomère. Un tel revêtement permet d'adapter parfaitement le profil du rouleau et des galets de compactage à celui de la préforme enroulée sur le mandrin d'imprégnation, de sorte à assurer l'application d'une pression uniforme en tout point de la surface extérieure de celui-ci.

De plus, comme représenté sur la figure 2, le dispositif de compactage 100, lorsqu'il est en position de travail sur le mandrin d'imprégnation 16, est disposé angulairement de sorte à ce que l'axe du rouleau de compactage 104 soit espacé d'un angle α de l'ordre de 20° par rapport à un plan P vertical passant par le centre de rotation du mandrin, les axes des galets de compactage 106 étant alors espacés d'un angle β compris entre 30° et 45° par rapport à ce même plan P.

On notera que, dans cette position de travail de la figure 2, les galets de compactage 106 sont situés derrière le rouleau de compactage 104 par rapport au sens d'avancement de la texture fibreuse sur le mandrin d'imprégnation. Bien entendu, une disposition inverse pourrait être envisagée.

## Revendications

1. Dispositif de compactage (100) pour machine d'enroulement d'une texture fibreuse sur un mandrin d'imprégnation, comprenant un châssis (102) sur lequel sont montés un rouleau de compactage (104) destiné à venir en appui contre la surface extérieure (28) d'un mandrin d'imprégnation (16) d'une machine d'enroulement (10), et deux galets de compactage (106) destinés chacun à venir en appui contre un angle formé entre la surface extérieure et un flasque latéral (30) du mandrin d'imprégnation, **caractérisé en ce qu'**il comporte en outre des moyens (112) de mise en vibration du rouleau et des galets de compactage, et **en ce que** chaque galet de compactage (106) est monté sur un support de galet (124) ayant une première partie (126) formant étrier apte à coulisser sur une tige longitudinale fixe (130) du châssis de façon à permettre un réglage de la position relative des galets de compactage par rapport au châssis selon une direction longitudinale, et une seconde partie (128) formant coulisseau montée sur la première partie et apte à coulisser par rapport à celle-ci selon une direction radiale de façon à permettre un réglage de la position relative des galets de compactage par rapport au châssis selon cette direction radiale.

2. Dispositif selon la revendication 1, dans lequel les moyens de mise en vibration du rouleau et des galets de compactage comprennent au moins un vibreur électrique (112) monté sur le châssis.

3. Dispositif selon l'une des revendications 1 et 2, comprenant en outre des moyens de réglage de la position relative du rouleau de compactage par rapport au châssis.

4. Dispositif selon la revendication 3, dans lequel le rouleau de compactage (104) est monté de façon rotative entre deux platines (114) solidaires du châssis, chaque platine ayant une extrémité qui est solidaire en rotation d'une roue dentée (116) apte à pivoter autour d'un axe horizontal (118) par engrènement d'une vis sans fin (120) de façon à assurer un réglage de la position relative du rouleau de compactage par rapport au châssis.

5. Dispositif selon l'une quelconque des revendications 1 à 4, dans lequel la surface extérieure du rouleau de compactage présente un profil correspondant à celui de la surface extérieure du mandrin d'imprégnation contre lequel il est destiné à venir en appui.

6. Dispositif selon l'une quelconque des revendications 1 à 5, dans lequel le rouleau de compactage (104) comprend une pluralité de sections longitudinales de rouleau (104a, 104, 104c, ...) indépendantes en rotation les unes des autres.

7. Dispositif selon l'une quelconque des revendications 1 à 6, dans lequel le rouleau de compactage et les galets de compactage sont recouverts d'un revêtement réalisé dans un matériau élastomère.

8. Machine d'enroulement (10) d'une texture fibreuse sur un mandrin d'imprégnation, comprenant :
un mandrin d'appel (14) sur lequel est destiné à être stockée une texture fibreuse (18) obtenue par tissage tridimensionnel, le mandrin d'appel ayant un axe de rotation (20) sensiblement horizontal ;
un mandrin d'imprégnation (16) sur lequel est destinée à être enroulée en couches superposées la texture fibreuse stockée sur le mandrin d'appel, le mandrin d'imprégnation ayant un axe de rotation (32) sensiblement horizontal et parallèle à l'axe de rotation du mandrin d'appel ;
des moteurs électriques (22, 34) pour entraîner en rotation les mandrins autour de leur axe de rotation respectif ;
une unité de commande (36) des moteurs électriques d'entraînement en rotation des mandrins ; et
un dispositif de compactage (100) selon l'une quelconque des revendications 1 à 7.

9. Machine selon la revendication 8, comprenant en outre un bâti (12) sur lequel est monté de façon rotative autour d'un axe (110) sensiblement horizontal le dispositif de compactage (100), et au moins un vérin (112) dont le corps est fixé sur le bâti et la tige fixée sur le châssis du dispositif de compactage de façon à pouvoir pivoter le dispositif autour de l'axe horizontal.

## Patentansprüche

1. Kompaktiervorrichtung (100) für eine Maschine zum Aufwickeln einer Faserstruktur auf einen Imprägnierdorn, umfassend einen Rahmen (102), an dem eine Kompaktierwalze (104), welche dazu bestimmt ist, an der Außenfläche (28) eines Imprägnierdorns (16) einer Wickelmaschine (10) in Anlage zu kommen, sowie zwei Kompaktierrollen (106), welche jeweils dazu bestimmt sind, an einer zwischen der Außenfläche und einem Seitenflansch (30) des Imprägnierdorns gebildeten Ecke in Anlage zu kommen, angebracht sind, **dadurch gekennzeichnet, dass** sie ferner Mittel (112) zum Versetzen der Walze und der Kompaktierrollen in Vibration umfasst, und dass jede Kompaktierrolle (106) an einem Rollenhalter (124) angebracht ist, der einen einen Bügel bildenden ersten Teil (126), welcher geeignet ist, auf einer festen Längsstange (130) des Rahmens zu gleiten, um eine Einstellung der Relativposition der Kompaktierrollen gegenüber dem Rahmen in einer Längsrichtung zu ermöglichen, und einen einen Schieber bildenden zweiten Teil (128) aufweist, der an dem ersten Teil angebracht und geeignet ist, gegenüber diesem in einer radialen Richtung zu gleiten, um eine Einstellung der Relativposition der Kompaktierrollen gegenüber dem Rahmen in dieser radialen Richtung zu ermöglichen.

2. Vorrichtung nach Anspruch 1, wobei die Mittel zum Versetzen der Walze und der Kompaktierrollen in Vibration wenigstens einen elektrischen Vibrator (112), welcher an dem Rahmen angebracht ist, umfassen.

3. Vorrichtung nach einem der Ansprüche 1 und 2, ferner umfassend Mittel zur Einstellung der Relativposition der Kompaktierwalze gegenüber dem Rahmen.

4. Vorrichtung nach Anspruch 3, wobei die Kompaktierwalze (104) zwischen zwei mit dem Rahmen fest verbundenen Platten (114) drehbar angebracht ist, wobei jede Platte ein Ende aufweist, das mit einem Zahnrad (116) drehfest verbunden ist, welches geeignet ist, durch Eingriff einer Schnecke (120) um eine horizontale Achse (118) zu schwenken, um eine Einstellung der Relativposition der Kompaktierwalze gegenüber dem Rahmen sicherzustellen.

5. Vorrichtung nach einem der Ansprüche 1 bis 4, wobei die Außenfläche der Kompaktierwalze ein Profil aufweist, das demjenigen der Außenfläche des Imprägnierdorns, an dem in Anlage zu kommen sie bestimmt ist, entspricht.

6. Vorrichtung nach einem der Ansprüche 1 bis 5, wobei die Kompaktierwalze (104) eine Vielzahl von Walzenlängsabschnitten (104a, 104b, 104c, ...), die voneinander drehunabhängig sind, umfasst.

7. Vorrichtung nach einem der Ansprüche 1 bis 6, wobei die Kompaktierwalze und die Kompaktierrollen mit einer aus einem Elastomermaterial gebildeten Beschichtung überzogen sind.

8. Maschine zum Aufwickeln (10) einer Faserstruktur auf einen Imprägnierdorn, umfassend:
einen Abrufdorn (14), auf dem eine durch dreidimensionales Weben erhaltene Faserstruktur (18) zu lagern bestimmt ist, wobei der Abrufdorn eine im Wesentlichen horizontale Rotationsachse (20) hat,
einen Imprägnierdorn (16), auf den die auf dem Abrufdorn gelagerte Faserstruktur in übereinander angeordneten Lagen aufzuwickeln bestimmt ist, wobei der Imprägnierdorn eine im Wesentlichen horizontale und zu der Rotationsachse des Abrufdorns parallele Rotationsachse (32) hat,
Elektromotoren (22, 34) zum Drehantreiben der Dorne um ihre jeweilige Rotationsachse,
eine Einheit zum Steuern (36) der Elektromotoren zum Drehantreiben der Dorne und
eine Kompaktiervorrichtung (100) nach einem der Ansprüche 1 bis 7.

9. Maschine nach Anspruch 8, ferner umfassend ein Gestell (12), an dem die Kompaktiervorrichtung (100) um eine im Wesentlichen horizontale Achse (110) drehbar angebracht ist, und wenigstens einen Zylinder (112), dessen Körper an dem Gestell befestigt ist und dessen Stange an dem Rahmen der Kompaktiervorrichtung befestigt ist, um die Vorrichtung um die horizontale Achse verschwenken zu können.

## Claims

1. A compacting device (100) for a machine for winding a fiber texture on an impregnation mandrel, the device comprising a frame (102) having mounted thereon a compacting roller (104) for bearing against the outside surface (28) of an impregnation mandrel (16) of a winding machine (10), and two compacting wheels (106), each designed to bear against a corner formed between the outside surface and a side plate (30) of the impregnation mandrel, **characterized in that** the compaction device further comprises means (112) for applying vibration to the compacting roller and wheels, and **in that** each compacting wheel (106) is mounted on a wheel support (124) having a first portion (126) forming a clamp suitable for sliding on a stationary longitudinal rod (130) of the frame so as to enable the compacting wheels to be adjusted in position relative to the frame in a longitudinal direction, and a second portion (128) forming a slider mounted on the first portion and suitable for sliding relative thereto in a radial direction so as to enable the positions of the compacting wheels to be adjusted relative to the frame in said radial direction.

2. A device according to claim 1, wherein the means for applying vibration to the compacting roller and wheels comprise at least one electric vibrator (112) mounted on the frame.

3. A device according to any one of claims 1 and 2, further comprising means for adjusting the position of the compacting roller relative to the frame.

4. A device according to claim 3, wherein the compacting roller (104) is mounted to rotate between two plates (114) secured to the frame, each plate having one end constrained to pivot with a toothed wheel (116) suitable for pivoting about a horizontal axis (118) by meshing with a wormscrew (120) so as to enable the position of the compacting roller to be adjusted relative to the frame.

5. A device according to any one of claims 1 to 4, wherein the outside surface of the compacting roller presents a profile corresponding to the profile of the outside surface of the impregnation mandrel against which it is to bear.

6. A device according to any one of claims 1 to 5, wherein the compacting roller (104) comprises a plurality of longitudinal roller sections (104a, 104b, 104c, ...) that are mutually independent in rotation.

7. A device according to any one of claims 1 to 6, wherein the compacting roller and the compacting wheels are covered in a coating made of an elastomer material.

8. A machine (10) for winding a fiber texture on an impregnation mandrel, the machine comprising:
a takeup mandrel (14) on which a fiber texture (18) obtained by three-dimensional weaving is to be stored, the takeup mandrel having an axis of rotation (20) that is substantially horizontal;
an impregnation mandrel (16) onto which superposed layers of the fiber texture stored on the takeup mandrel are to be wound, the impregnation mandrel having an axis of rotation (32) that is substantially horizontal and parallel to the axis of rotation of the takeup mandrel;
electric motors (22, 34) for driving the mandrels in rotation about their respective axes of rotation;
a control unit (36) for controlling the electric motors for driving rotation of the mandrels; and
a compacting device (100) according to any one of claims 1 to 7.

9. A machine according to claim 8, further comprising a support structure (12) having the compacting device (100) mounted thereon to pivot about a substantially horizontal axis (110), together with at least one actuator (112) having its body fastened to the support structure and its rod fastened to the frame of the device so as to enable the compacting device to be pivoted about the horizontal axis.
